# EUROPÄISCHE PATENTSCHRIFT

(11) **EP 1 516 755 B1**
(45) Veröffentlichungstag und Bekanntmachung des Hinweises auf die Patenterteilung: **19.08.2009**
(21) Anmeldenummer: 04021977.6
(22) Anmeldetag: 16.09.2004
(51) Int. Cl.: B60D 1/54

(54) **Schwenkbare Anhängekupplung**
Pivotal towing device
Dispositif d'attelage articulé

(30) Priorität: 17.09.2003 DE 10342834
(43) Veröffentlichungstag der Anmeldung: 23.03.2005
(73) Patentinhaber: WESTFALIA - Automotive GmbH, 33378 Rheda-Wiedenbrück (DE)
(72) Erfinder: Domke, Friedrich, 33442 Herzebrock-Clarholz (DE); Hermbusch, Gerhard, 33449 Langenberg (DE)
(74) Vertreter: Schober, Mirko

(56) Entgegenhaltungen:
- EP-A- 1 182 062
- EP-A- 1 288 026
- WO-A-03/072375
- DE-A- 19 858 978

## Beschreibung

Die Erfindung bezieht sich auf eine Anhängekupplung für Kraftfahrzeuge, insbesondere PKWs, gemäß dem Oberbegriff des Patentanspruchs 1.

Eine solche Anhängekupplung ist aus dem Dokument DE 196 12 959 A1 bekannt. Bei dieser Anhängekupplung soll von der Betriebsstellung in die Ruhelage die Kugelstange soweit geschwenkt werden, daß in der Ruhelage der Kugelhals gleich oder höher als die Kupplungskugel der Kugelstange angeordnet ist, womit also die Kupplungskugel von der Fahrzeugaufstandsebene einen geringeren Abstand als der Kugelhals hat. Um dies zu realisieren, genügt bereits ein Schwenk der Kugelstange um etwa 90° - 120°. In der Ruhelage weist die Konvexseite des Kugelhalses der Kugelstange der bekannten Anhängekupplung in Fahrzeuglängsrichtung gesehen schräg nach vorn und oben, was je nach den Gegebenheiten an dem betreffenden Fahrzeug ausreicht, um die Kugelstange in der Ruhelage verdeckt unterzubringen.

Aus dem Dokument DE 26 19 913 C2 ist ebenfalls eine schwenkbare Anhängekupplung bekannt, bei der die Kugelstange aus der Betriebsstellung heraus entlang einer Raumkurve in die Ruhelage verschwenkt wird. Der Schwenkwinkel beträgt hierbei etwa 90°, damit wird jedoch nur erreicht, daß die Kugelstange in der Ruhelage unterhalb des rückwärtigen Stoßfängers des Fahrzeugs angeordnet ist.

Aus dem Dokument FR 0 288 366 A1 geht eine Anhängekupplung hervor, bei der die Kugelstange um eine einzige Achse um 180° von der Betriebsstellung in die Ruhelage bzw. umgekehrt geschwenkt wird. Dabei weist zwar die Konvexseite des Bogens des Kugelhalses in der Ruhelage entgegen der Fahrzeug-Vorwärtsfahrtrichtung nach hinten, allerdings steht in der Ruhelage die Kugelstange und insbesondere daran die Kupplungskugel weit nach unten vor, was zum einen eine große Bodenfreiheit des Fahrzeugs benötigt und zum anderen aus ästhetischen Gründen nicht vorteilhaft ist.

Der Erfindung liegt die Aufgabe zugrunde, eine Anhängekupplung der eingangs genannten Art zu schaffen, in der die Kugelstange in der Ruhelage nicht nur nicht sichtbar ist, sondern auch nicht an der Fahrzeugunterseite vorsteht.

Diese Aufgabe wird bei einer Anhängekupplung gemäß dem Oberbegriff des Patentanspruchs 1 gelöst durch die kennzeichnenden Merkmale des Patentanspruchs 1.

Für die Erfindung ist wesentlich, daß auch dann noch eine nicht sichtbare Unterbringung der Kugelstange in der Ruhelage möglich ist, wenn der Kugelhals der Kugelstange einen ausladenden Bogen aufweist. Ein derartig gebogener Kugelhals ist jedoch erforderlich, wenn - wie bei modernen PKWs üblich - ein voluminöser, hinterer Stoßfänger eines PKWS in der Betriebsstellung der Anhängekupplung umgriffen werden soll. Da Stoßfänger der modernen Art ein im wesentlichen C-förmiges, in Fahrzeuglängsrichtung nach vorn hin offenes Querschnittsprofil aufweisen, besteht bei der erfindungsgemäßen Anhängekupplung die vorteilhafte Möglichkeit, beim Überführen der Kugelstange in die Ruhelage deren ausladend gebogenen Kugelhals in das Innere eines solchen Stoßfängers hineinzuschwenken.

Vorteilhafte Ausgestaltungsmerkmale der Erfindung ergeben sich aus den Unteransprüchen. Die Erfindung wird nachfolgend anhand der Zeichnung an einem Ausführungsbeispiel noch näher erläutert. Dabei zeigen:
- Fig. 1: in schematischer Darstellung eine schwenkbare Anhängekupplung in perspektivischer Seitansicht in der Schleppstellung,
- Fig. 2: die Rückansicht der Anhängekupplung gemäß Fig. 1 in der Betriebsstellung, einer Zwischenstellung und der Ruhelage und
- Fig. 3: eine perspektivische Wiedergabe der Anhängekupplung nach den Figuren 1 und 2 in den drei in Fig. 2 wiedergegebenen Positionen.

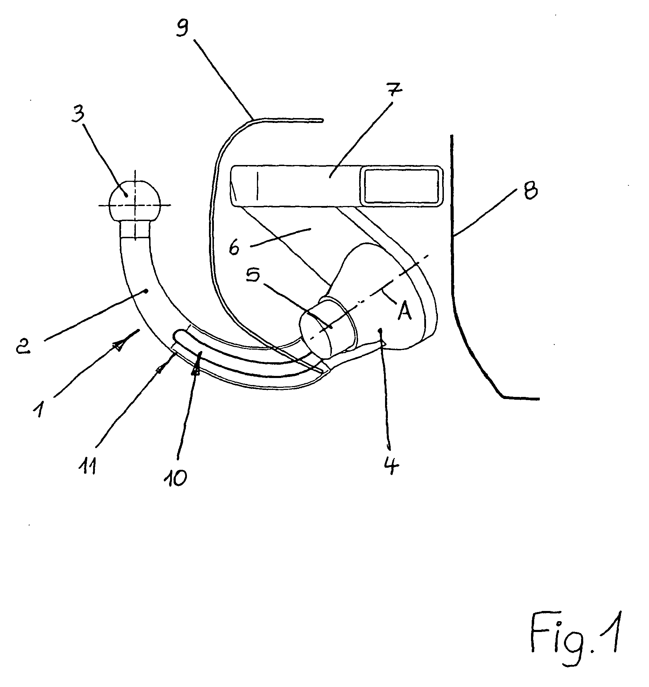

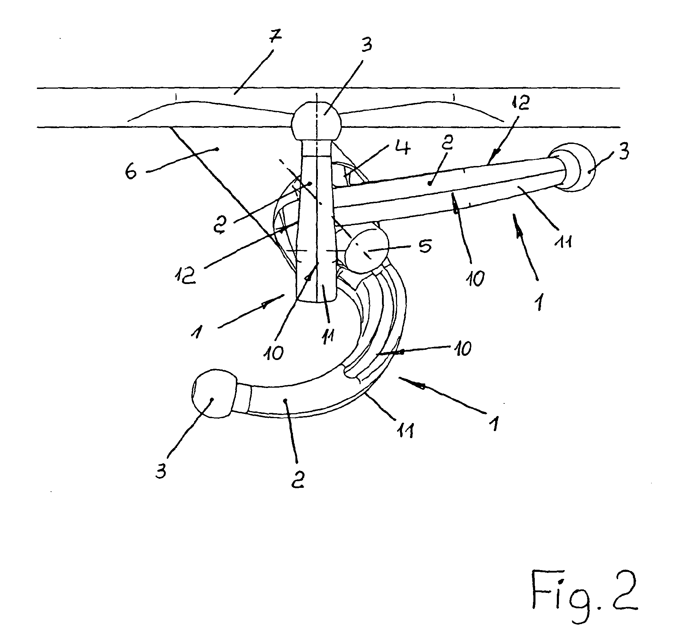

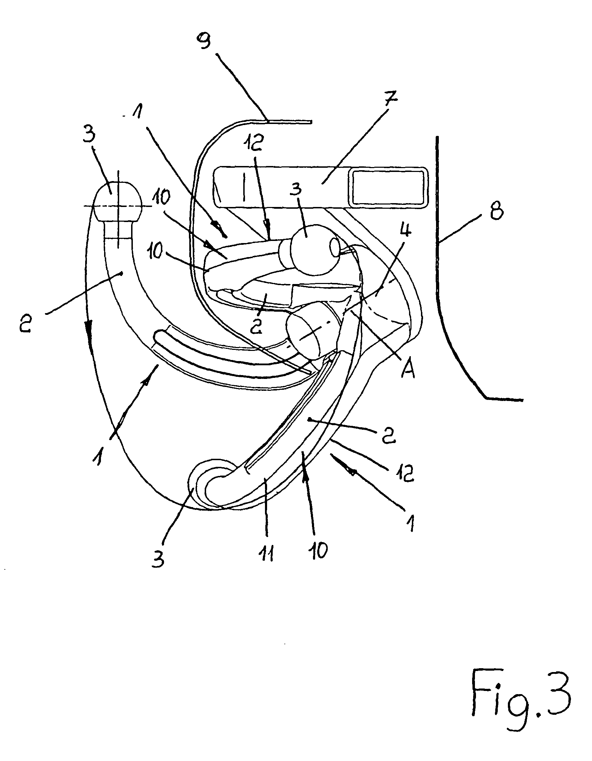

Im einzelnen zeigt Fig. 1 die wesentlichen Bauteile einer Anhängekupplung, zu denen in erster Linie eine Kugelstange 1 gehört. Die Kugelstange 1 besteht aus einem gebogenen Kugelhals 2, der an seinem freien Ende eine Kupplungskugel 3 trägt. An dem von der Kupplungskugel 3 abliegenden Ende geht der Kugelhals 2 in ein Lagerelement 4 über, welches als Lagerhülse oder Lagerzapfen ausgeführt ist. Bei der dargestellten Ausführung des Lagerelementes 4 als Lagerhülse erfolgt die schwenkbare Lagerung der Kugelstange 1 auf einem Achsstummel 5, der an einer Konsole 6 sitzt. Die Konsole 6 ist fest mit einem Querträger 7 ausgebildet, der im rückwärtigen Fahrzeugbereich zwischen einer den Kofferraum begrenzenden Rückwand 8 und einem Stoßfänger 9 angeordnet wird. Das Lagerelement 4 der Kugelstange 1 ist um eine Achse A mit einer etwa Dreiviertel-Umdrehung schwenkbar, statt dessen kann die Kugelstange 1 um mehrere Achsen schwenkbar sein, um eine Raumkurve zwischen der Betriebsstellung und der Ruhelage zu durchfahren, damit die in den Figuren 2 und 3 erkennbare Position in der Ruhelage erzielt werden kann.

Der Kugelhals 2 der Kugelstange 1 besteht im wesentlichen aus einem stetig gebogenen Abschnitt, der als Bogen 10 bezeichnet ist. Der Bogen 10 des Kugelhalses 2 weist eine stetige Krümmung auf, der Krümmungsverlauf entspricht annähernd dem eines Halbkreises oder einer Halbellipse. In anderer Ausführung kann der Bogen 10 des Kugelhalses 2 auch Krümmungen mit mehrfachen Krümmungsradien und auch solche Krümmungen aufweisen, die in unterschiedlichen Krümmungsebenen liegen. Entscheidend ist, daß der Kugelhals den Abstand zwischen dem Schwenklager der Kugelstange und der Kupplungskugel 3 in geeigneter Weise mit Untergreifen des Stoßfängers 9 überbrückt, wozu im Stoßfänger 9 ggf. eine Aussparung vorgesehen werden kann. Im Bereich des Bogens 10 weist der Kugelhals 2 der Kugelstange 1 somit eine konvex gekrümmte Seite auf, die in der Betriebsstellung nach unten und teilweisse entgegen der Vorwärtsfahrtrichtung nach hinten hinweist, und dementsprechend eine konkav gekrümmte Seite, die nach oben hin liegt sowie teilweise in Richtung der Vorwärtsfahrtrichtung weist. Der Bogen 10 des Kugelhalses 2 erstreckt sich nicht zwingend in Richtung der senkrecht zur Fahrzeugaufstandsebene stehenden Fahrzeuglängsmittenebene. Dieser Zustand in der Betriebsstellung muß lediglich für die Kupplungskugel 3 und den sich unmittelbar daran anschließenden Abschnitt des Kugelhalses 2 mit gerader Achse erfüllt sein. Die konvex gekrümmte Seite ist nachfolgend als Konvexseite 11 bezeichnet.

Wie die Figuren 2 und 3 veranschaulichen, wird aus der Betriebsstellung heraus zur Überführung in die Ruhelage die Kugelstange um einen Winkel gedreht, der etwa 260° beträgt. Bei dem Schwenk aus der Betriebsstellung heraus durchfahren die einzelnen Punkte der Kugelstange 1 eine Raumkurve, die des äußeren Scheitels der Kugelstange 3 ist in Fig. 3 dargestellt und daran ist durch den Pfeil die Schwenkrichtung von der Betriebsstellung in die Ruhelage der Kugelstange kenntlich gemacht.

Zu Beginn des Einschwenkens von der Betriebsstellung in die Ruhelage der Kugelstange senkt sich zunächst die Kupplungskugel ab, wobei ein Bewegungsabschnitt durchlaufen wird, in welchem der Kugelhals 2 oberhalb der Kupplungskugel 3 liegt. In der Ruhelage jedoch ist der Kugelhals 2 gegenüber der Kupplungskugel 3 wieder leicht abgesenkt, dadurch hat die Kupplungskugel 3 von der Fahrzeugaufstandsebene einen größeren Abstand als der Kugelhals 2. Es versteht sich, daß beim Ausschwenken der Kugelstange 1 von der Ruhelage in die Betriebsstellung die umgekehrte Bewegungsfolge stattfindet.

Der Kugelhals 2 der Kugelstange 1 weist ebenso wie die Kupplungskugel 3 eine Seite 12 auf, die bei der Schwenkbewegung der Kugelstange 1 hinten liegt. Bei der in der Darstellung gewählten Anordnung handelt es sich bei der Seite 12 des Kugelhalses 2 um die in Vorwärtsfahrtrichtung des Fahrzeuges gesehen linke Seite. Diese linke Seite 12 des Kugelhalses 2 kehrt sich bei dem Einschwenken der Kugelstange 1 zunächst nach unten hin, um dann in der Ruhelage der Kugelstange 1 nach oben hin zu liegen zu kommen. In dieser Position weist die Konvexseite 11 des Bogens 10 des Kugelhalses 2 entgegen der Fahrzeug-Vorwärtsfahrtrichtung nach hinten hin. Wie insbesondere Fig. 3 dazu deutlich macht, schwenkt sich beim Einschwenken der Kugelstange 1 der Kugelhals 2 um die untere Kante des Stoßfängers 9 herum, und in der Ruhelage ragt der ausladende Bereich des Kugelhalses 2 in das Innere des Stoßfängers 9 hinein. Folglich ist gegenüber der Betriebsstellung die zunächst in Fahrtrichtung links liegende Seite 12 des Kugelhalses 2 in der Ruhelage der Kugelstange 1 nach oben hin gekehrt. Dabei ist eine besonders raumsparende Anordnung dann gegeben, wenn in der Ruhelage die Kupplungskugel 3 und das Schwenklager der Kugelstange 1 in Fahrzeuglängsrichtung gesehen auf gleicher Höhe sich befinden.

Ist, wie beim Ausführungsbeispiel dargestellt, nur eine einzige Schwenkachse A, die in Fig. 1 angedeutet ist, vorgesehen, dann liegt diese Schwenkachse schräg sowohl zur Fahrzeuglängsmittenebene als auch zur Fahrzeugquerebene, wobei diese beiden Ebenen senkrecht zur Aufstandsebene des Fahrzeugs stehen. Sowohl relativ zur Längsmittenebene als auch zur Querebene handelt es sich bei dem Neigungswinkel um einen spitzen Winkel. Zudem steigt projiziert auf die Fahrzeuglängsmittenebene die Schwenkachse A von hinten nach vorn hin an.

## Patentansprüche

1. Anhängekupplung für Kraftfahrzeuge, insbesondere PKWs, mit einer Kugelstange (1), die aus einem gebogenen, am freien Ende eine Kupplungskugel (3) tragenden Kugelhals (2) sowie aus einem Lagerelement (4) besteht, welches an dem von der Kupplungskugel (3) abliegenden Ende an dem Kugelhals (2) anschließt und um eine einzige, fahrzeugfeste Schwenkachse (A) drehbar ist, wobei diese Schwenkachse (A) unter je einem spitzen Winkel sowohl zu der vertikalen Längsmittenebene als auch zu der zur vertikalen Längsmittenebene sowie zur Fahrzeug-Aufstandsebene senkrechten Querebene des Fahrzeugs steht und in Richtung von dem Bogen (10) des Kugelhalses (2) der Kugelstange (1) weg nach vorn hin bezogen auf die Vorwärtsfahrtrichtung ansteigt, wobei ferner die Kugelstange (1) zwischen der Betriebsstellung und der Ruhelage entlang einer Raumkurve schwenkt und der Bogen (10) des Kugelhalses (2) in der Betriebsstellung mit seiner Konvexseite (11) nach unten hin zur Fahrzeugaufstandsebene weist,
**dadurch gekennzeichnet,**
**daß** der Schwenkwinkel des Lagerelementes (4) zwischen der Betriebsstellung und der Ruhelage der Kugelstange (1) in der Größenordnung einer Dreiviertel-Umdrehung um die Achse (A) liegt und die beim Schwenk von der Betriebsstellung weg entgegen der Schwenkrichtung weisende Seite (12) des Kugelhalses (2) in der Ruhelage nach oben hingekehrt ist und die Konvexseite (11) des Bogens (10) des Kugelhalses (2) in der Ruhelage entgegen der Vorwärtsfahrtrichtung nach hinten weist.

2. Anhängekupplung nach Anspruch 1,
**dadurch gekennzeichnet,**
**daß** der Bogen (10) des Kugelhalses (2) eine stetige Krümmung aufweist.

3. Anhängekupplung nach Anspruch 2,
**dadurch gekennzeichnet,**
**daß** der Bogen (10) des Kugelhalses (2) eine Krümmung annähernd in Form eines Halbkreises oder einer halben Ellipse aufweist.

4. Anhängekupplung nach einem der Ansprüche 1 - 3,
**dadurch gekennzeichnet,**
**daß** in der Ruhelage die Kupplungskugel (3) und das Lagerelement (4) der Kugelstange (1) in Fahrzeuglängsrichtung gesehen auf gleicher Höhe liegen.

## Claims

1. Towing device for motor vehicles, more particularly passenger cars with a ball rod (1) which consists of a curved ball neck (2) supporting a coupling ball (3) at the free end and also of a bearing element (4) which adjoins the ball neck (2) at the end remote from the coupling ball (3) and is capable of rotating about a single pivotal axis (A) fixed on the vehicle, wherein this pivotal axis (A) stands at an acute angle both to the vertical longitudinal central plane and also to the transverse plane of the vehicle which is perpendicular to the vertical longitudinal central plane and to the vehicle road contact plane and rises in the direction forwards away from the curve (10) of the ball neck (2) of the ball rod (1) in relation to the forward driving direction, wherein furthermore the ball rod (1) pivots between the operating position and the rest position along a spatial curve and the curve (10) of the ball neck (2) in the operating position points with its convex side (11) downwards towards the vehicle road contact plane, **characterised in that** the pivotal angle of the bearing element (4) between the operating position and the rest position of the ball rod (1) lies in the order of a three-quarter revolution about the axis (A) and the side (12) of the ball neck (2) pointing opposite the pivotal direction during pivotal movement away from the operating position is turned upwards in the rest position and the convex side (11) of the curve (10) of the ball neck (2) in the rest position points backwards opposite the forward driving direction.

2. Towing device according to claim 1 **characterised in that** the curve (10) of the ball neck (2) has a constant curvature.

3. Towing device according to claim 2 **characterised in that** the curve (10) of the ball neck (2) has a curvature approximately the shape of a semi-circle or semi-ellipse.

4. Towing device according to one of claims 1 to 3 **characterised in that** in the rest position the coupling ball (3) and the bearing element (4) of the ball rod (1) lie at the same level seen in the vehicle longitudinal direction.

## Revendications

1. Dispositif d'attelage pour véhicules automobiles, en particulier pour voitures particulières, avec une barre d'attelage à rotule (1), qui consiste en un col de rotule (2) arqué, portant, à l'extrémité libre, une rotule d'attelage (3), ainsi qu'en un élément de support (4), qui est raccordé au col de rotule (2), à l'extrémité opposée à la rotule d'attelage (3), et qui peut tourner autour d'un axe de pivotement (A) unique, fixé au véhicule automobile, cet axe de pivotement (A) étant disposé en formant un angle aigu aussi bien par rapport au plan central longitudinal vertical que par rapport au plan transversal du véhicule automobile, perpendiculaire au plan central longitudinal vertical, ainsi qu'au plan de contact au sol du véhicule automobile, et étant incliné vers le haut, dans la direction s'écartant du coude (10) du col de rotule (2), vers l'avant, considéré par rapport à la marche avant du véhicule automobile, la barre à rotule (1) pivotant, en outre, entre la position de service et la position de repos, le long d'une courbe spatiale, et le coude (10) du col de rotule (2), en position de service, étant orienté vers le bas, avec son côté convexe (11), par rapport au plan de contact au sol du véhicule automobile,
**caractérisé en ce que** l'angle de pivotement de l'élément de support (4) entre la position de service et la position de repos de la barre à rotule (1) est situé dans un ordre de grandeur de trois-quarts de tour autour de l'axe (A), et que le côté (12) du col de rotule (2), orienté à l'opposé de la direction de pivotement, lors du pivotement à partir de la position de service, est tourné vers le haut, et que, dans la position de repos, le côté convexe (11) du coude (10) du col de rotule (2) est orienté vers l'arrière, à l'opposé de la direction de marche en avant.

2. Dispositif d'attelage selon la revendication 1, **caractérisé en ce que** le coude (10) du col de rotule (2) présente une courbure continue.

3. Dispositif d'attelage selon la revendication 1, **caractérisé en ce que** le coude (10) du col de rotule (2) présente une courbure approximativement en forme de demi-cercle ou de demi-ellipse.

4. Dispositif d'attelage selon l'une des revendications 1 à 3, **caractérisé en ce que**, dans la position de repos, la rotule d'attelage (3) et l'élément de support (4), vus dans la direction longitudinale du véhicule automobile, sont situés à la même hauteur.
